# EUROPÄISCHE PATENTANMELDUNG

(11) **EP 2 431 307 A2**
(43) Veröffentlichungstag der Anmeldung: **21.03.2012**
(21) Anmeldenummer: 11007343.4
(22) Anmeldetag: 09.09.2011
(51) Int. Cl.: B65G 21/20

(54) **Vakuumtransportband und Ventil für die Vakuumregelung dieses Transportbands**

(30) Priorität: 16.09.2010 DE 102010037593; 16.09.2010 DE 202010008561 U; 01.03.2011 DE 202011000458 U
(71) Anmelder: Montech AG, 4552 Derendingen (CH)
(72) Erfinder: Steffen, Christof, 3067 Boll (CH)
(74) Vertreter: Arat, Dogan

(57) **Zusammenfassung**

Bei einem Vakuumtransportband zum Aufnehmen, Transportieren und Ablegen von flächigen Gegenständen,
- mit einem Umlaufantrieb,
- mit einem U-Profil (3), wobei das U-Profil (3) einen Transportlauf und einen Rücklauf umfasst,
- mit einem Transportband (8)

soll das U-Profil (3) auf der Rücklaufseite ein Halterelement (5) umfasst sein.

## Beschreibung

### Gebiet der Erfindung

Die Erfindung betrifft eine Vorrichtung nach dem Oberbegriff des Anspruchs 1, sowie ein Ventil für die Vakuumregelung nach Anspruch 11 und zuletzt ein Verfahren nach dem Oberbegriff des Anspruchs 17.

### Stand der Technik

Aus dem Stand der Technik sind verschiedene Vakuumtransportbänder, als auch Ventile bekannt und gebräuchlich. Daneben werden zum Ver- oder Bearbeiten von flächigen Gegenständen Mehrachsroboter eingesetzt, welche allerdings den Nachteil aufweisen, dass bei einem Aufnehmen, Transportieren und Ablegen in der Regel ein Leerrücklauf sich nachteilig auf die Effizienz und die Kostenstruktur auswirkt. Hinzu kommt der Umstand, dass die Roboterarme zwar die geforderten vier bis sechs Tausend Handlungsbewegungen je Stunde durchführen können, aber die zu transportierenden flächigen Gegenstände, gerade bei Solarwafern oder Solarzellen die inzwischen sehr dünn hergestellt werden und eine entsprechende Beschleunigung des Roboterarms zu Beschädigungen führen können. Daneben ist der Nachteil zu beobachten, dass die Mehrachsroboter lediglich nur jeweils einen flächigen Gegenstand aufnehmen, transportieren und ablegen können. Dies ist ebenfalls nachteilig für die Effizienz einer solchen Maschine.

### Offenbarung der Erfindung

Aufgabe der Erfindung ist es, ein Vakuumtransportband, sowie ein Ventil zur Vakuumregelung des Vakuumtransportbandes anzugeben, mit welchem die Nachteile des Standes der Technik behoben oder zumindest gelindert werden. Insbesondere ist es Aufgabe der Erfindung, ein Vakuumtransportband zu schaffen, welches nicht nur die flächigen Gegenstände schont, sondern auch effizient und kostengünstig arbeitet.

Die Aufgabe wird mit einem Vakuumtransportband gemäss Anspruch 1, sowie einem Ventil nach Anspruch 11 und ein Verfahren nach Anspruch 17.

Das erfindungsgemässe Vakuumtransportband ist geeignet zum Aufnehmen, Transportieren und Ablegen von flächigen Gegenständen. Das Aufnehmen bedeutet in diesem Zusammenhang bevorzugt, dass ein zugeführter flächiger Gegenstand durch das Erzeugen von Vakuum an das Vakuumtransportband herangezogen wird. In gleicher Weise ist es aber auch denkbar, dass beim Heranführen des flächigen Gegenstandes von unten eine Feder in der Weise angeordnet ist, dass der flächige Gegenstand direkt an das Vakuumtransportband angelegt wird und das Vakuumtransportband lediglich das Halten des flächigen Gegenstandes umsetzt. Auch dieser Umstand kann als Aufnehmen bezeichnet werden. In einem bevorzugten Ausführungsbeispiel beinhaltet das Transportieren des flächigen Gegenstandes die Verbringung anhand eines umlaufenden Vakuumtransportbandes um ein erfindungsgemässes U-Profil. Richtung und Geschwindigkeit des Transports richtet sich nach Form des U-Profils und der Geschwindigkeit mit welcher das Vakuumtransportband angetrieben wird. In einem bevorzugten Ausführungsbeispiel ist von dem Ablegen des flächigen Gegenstandes die Rede. Mit Ablegen soll hierbei gemeint sein, dass entweder das Vakuumtransportband nicht mehr Unterdruck aufweist und dadurch der flächige Gegenstand vom Vakuumtransportband fällt oder abgehoben wird. Ebenso kann Teil des Ablegens sein, wenn der flächige Gegenstand durch einen Schaber vom Vakuumtransportband gelöst wird. Vorteile beim Einsatz eines Vakuumtransportbandes sind Kosteneffizienz und die Verhinderung von Leerläufen im Ablauf.

Das Vakuum eines erfindungsgemässen Ausführungsbeispiels des Vakuumtransportbandes weist einen Umlaufantrieb an. Dieser besteht aus einem Zahnriemenrad, welches durch einen Elektromotor angetrieben wird. Das Zahnrad steht in Wirkverbindung mit einem Zahnriemenprofil, welches auf der Unterseite des Vakuumtransportbandes ausgeformt ist. Unterseite bedeutet die dem zu transportierenden flächigen Gegenstand zugewandte Seite. Vorteilhaft hierbei ist der Umstand, dass der Umlaufantrieb weniger Energie benötigt und dauerhaft einsetzbar ist. Daneben ist vorteilhaft, dass solche Elektroantriebe zwischenzeitlich sehr langlebig sind und wenig Platz benötigen.

Ein erfindungsgemässes Ausführungsbeispiel weist ausserdem ein U-Profil auf, wobei das U-Profil einen Transportlauf und einen Rücklauf umfasst. Als Transportlauf wird herkömmlicher Weise bei Vakuumtransportbändern die Oberseite des Vakuumtransportbandes angesehen. Der Rücklauf erfolgt hierbei auf der Unterseite des U-Profils, welches üblicher Weise nicht für den Transport geeignet ist. Die Form und Grösse des U-Profils richtet sich nach den Anforderungen der zu transportierenden flächigen Gegenstände. In der Regel werden hierzu Hohlprofile in modularer Bauweise verwendet, welche den Vorteil aufweisen, dass eine möglichst hohe Flexibilität zur Anpassung aller Kundenwünsche möglich ist.

In einem bevorzugten Ausführungsbeispiel werden als flächige Gegenstände Solarwafer, Solarzellen, Solar-Strings, Kompaktdisks (CDs), DVDs, Papier, Kartonagen oder flächige Bauelemente aus der Elektro- oder Metallindustrie angesehen.

In einem bevorzugten Ausführungsbeispiel wird das Vakuumtransportband, aus dem Zusammenspiel des Zahnriemenprofils mit dem Umlaufantrieb angetrieben. Vorteilhaft ist hierbei wiederum, dass eine energieeffiziente Umsetzung des Antriebs auf eine Umlaufbewegung des Vakuumtransportbandes ermöglicht wird.

Ein bevorzugtes Ausführungsbeispiel weist eine Kammer im U-Profil auf. Diese Kammer ist über ein Ventil mit einer Vakuumquelle verbunden. Die Kammer dient als Puffer zur Versorgung des Vakuumtransportbandes mit Unterdruck. Dies hat den Vorteil, dass keine aufwändige Röhrenkonstruktion bis hin zum Vakuumtransportband vorgesehen werden muss.

Ein anderes bevorzugtes Ausführungsbeispiel eines erfindungsgemässen Vakuumtransportbandes ist in der Weise gestaltet, dass das Halterelement zumindest eine Zuführleitung und ein Vakuumbecken umfasst. Hierbei können auch mehrere Zuführleitungen in einem Vakuumbecken münden. Die Zuführleitung bildet hierbei die Brücke zwischen dem Vakuumbecken des Halterelements und dem Vakuumpuffer. Vorteilhaft hierbei wiederum ist der Umstand, dass eine Feinjustierung durch den Durchmesser der Zuführleitung und der Tiefe bzw. Länge bzw. Durchmesser des Vakuumbeckens vorgenommen werden kann, um entsprechend den zu befördernden flächigen Gegenständen und deren Gewicht, sowie Eigenschaften gerecht zu werden.

Bevorzugt ist das U-Profil in mehrere Abschnitte gegliedert. Diese Abschnitte weisen bevorzugt eine Gesamtlänge von 50 mm bis 300 mm, bevorzugt 100 mm bis 250 mm, noch bevorzugter 160 mm bis 220 mm auf. Vorteil hierbei ist der Umstand, dass durch die Einteilung der Abschnitte des U-Profils eine möglichst genaue Anpassung von Druck in Beziehung zu dem zu transportierenden flächigen Gegenstand und seinen Eigenschaften wie Gewicht oder Form vorgenommen werden kann.

Bevorzugt sind auch die im Halterelement eingeformten Vakuumbecken in voneinander getrennte Abschnitte gegliedert. Diese Abschnitte weisen ebenfalls eine Gesamtlänge von 50 mm bis 300 mm, bevorzugt 100 mm bis 250 mm, noch bevorzugter 160 mm bis 220 mm auf. In der Regel ist die Gesamtlänge des Abschnitts des Vakuumbeckens auf die Gesamtlänge des Abschnitts des U-Profils angepasst. Vorteilhaft hierbei ist eine möglichst einheitlich gestaltetes Unterdruckprofil, welches über die gesamte Länge des Abschnitts einen gleichen Unterdruck aufweist.

Durch das erfindungsgemässe Halterelement ist es möglich, ein hier beschriebenes Vakuumtransportband in der Weise zu gestalten, dass es zur Beförderung von flächigen Gegenständen auf der Transportlaufseite und/oder auf der Rücklaufseite eingesetzt werden kann. Dies ergibt sich daraus, dass das Halterelement das Durchhängen des Vakuumtransportbandes auf der Rücklaufseite verhindert. Durch dieses Durchhängen würde ansonsten seitwärts derart der Unterdruck vergoldet werden, dass flächige Gegenstände nicht mehr gehalten werden können. Vorteilhaft hierbei ist eine sehr hohe Flexibilität im Einsatz von erfindungsgemässen Vakuumtransportbändern.

Ein anderes bevorzugtes Ausführungsbeispiel ist in der Weise gestaltet, dass ein erfindungsgemässes Vakuumtransportband zunächst auf der Rücklaufseite einen flächigen Gegenstand transportiert und anschliessend auf die Transportseite eines anderen Vakuumtransportbandes zur Weiterbeförderung übergibt. Das weitere Vakuumtransportband kann hierbei ohne Halterelement ausgestattet sein, wie es im Stand der Technik üblich ist. Dieser Vorgang kann beliebig fortgesetzt werden und ermöglicht eine sehr hohe Flexibilität in der Anwendung.

In einem bevorzugten Ausführungsbeispiel ist ein Ventil für die Vakuumregelung bzw die Vakuumschaltung des erfindungsgemässen Vakuumtransportbandes vorgesehen. Die Vakuumschaltung dient der Erzeugung des Abwurfimpulses, womit der zu transportierende flächige Gegenstand abgegeben wird. Dieses Ventil weist einen Zugang auf. Dieser Zugang ist in der Weise gestaltet, dass von einer Vakuumquelle über Leitungen ein Unterdruck erzeugt wird, welcher über den Zugang an das Gehäuses des Ventils herangeführt wird. Form und Gestalt des Gehäuses sind zu Vernachlässigen, da sie in der Regel an gegebene Rahmenbedingungen angeglichen werden und daher nicht einheitlich sein können. Der Zugang stellt lediglich einen luftdichten Übergang der Verbindungen von der Vakuumquelle zum Ventil her. Vorteil hierbei ist der Umstand, dass möglichst wenig Unterdruck verloren geht. Das erfindungsgemässe Gehäuse eines Ventils weist ausserdem eine Innenkammer auf. Diese Innenkammer dient vorteilhafter Weise der Regelung des Ventils. Ausserdem ist in einem bevorzugten Ausführungsbeispiel eines erfindungsgemässen Ventils mindestens ein Ausgang vorgesehen. Dieser Ausgang stellt sich als rohrförmige Ausbildung des Gehäuses dar. Der Ausgang dient dazu eine Verbindung des Ventils mit dem Vakuumtransportband herzustellen. Vorteilhaft hierbei ist eine möglichst sichere, einfache und kostengünstige Verbindung des Ventils mit dem Vakuumtransportband.

Ein erfindungsgemässes Ausführungsbeispiel weist ausserdem einen zusätzlichen Druckluftzulauf. Dieser Druckluftzulauf ist in der Weise gestaltet, dass er über eine Leitung mit der Innenkammer des Gehäuses verbunden ist und über Leitungen durch eine Druckluftquelle versorgt.

Der Druckluftzulauf ist vorzugsweise in der Art gestaltet, dass durch Einschiessen von Druckluft in die Innenkammer die Umleitung von einer Ruhelage in eine Arbeitslage versetzt wird. Dies geschieht im einzelnen dadurch, dass die Umleitung, welche bspw. in einem Schienen- oder Führungssystem verschiebbar gelagert sein kann, durch das Einbringen von Druckluft von einer Ruhelage in eine Arbeitslage verschoben wird. Dies geschieht im einzelnen dadurch, dass der zunächst in Ruhelage verschlossene Zugang durch das Verschieben der Umleitung auf den Zugang ein By-Pass zwischen Zugang und Ausgang entsteht, was wiederum bedeutet, dass die Umleitung anschliessend in der Arbeitslage befindlich ist. Im bevorzugten Ausführungsbeispiel ist der Zugang auf der dem später zu haltenden flächigen Gegenstand abgewandten Seite angebracht. Der Ausgang ist in etwa einem 90° Winkel auf einer Seitenwandung des Gehäuses angebracht. Die Umleitung ist rohrförmig und bildet eine in etwa 90° geknickte Bohrung bzw Kolben. Vorteilhaft hierbei ist der Umstand, dass die Ansteuerung des Ventils gänzlich ohne elektrischen Antrieb oder andere Steuerungsmechanismen, sondern nur durch Einbringen von Druckluft in die Innenkammer ermöglicht ist. In einem anderen Ausführungsbeispiel ist es denkbar, dass das Ventil durch eine elektrische Schaltung bzw ein elektrisch betätigtes Ventil angesteuert ist. Vorteil wäre hierbei, dass eine schnelle Umschaltung ermöglicht wird. Die Verschiebbarkeit der Umleitung ist durch zwei Anschläge begrenzt. Je nach dem, von welcher Stirnseite des Gehäuses die Druckluft eingeblasen wird, wird die Umleitung entweder an denen Anschlag oder an den anderen Anschlag verschoben.

Ein anderes bevorzugtes Ausführungsbeispiel eines erfindungsgemässen Ventils weist ausserdem einen Sensor auf, geeignet zur Lagedetektion der Umleitung. Der Sensor kann hierbei unterschiedlicher Ausgestaltung sein. Je nach Anwendungsgebiet oder Differenz des Nutzers kommen als Sensoren ein Ultraschallsensor, ein opto elektronischer Sensor, aber auch resestive Sensoren, induktive Sensoren, Differenzialtransformatoren, induktive Wegaufnehmer, Wirbelstromsensoren, induktive Nährungsschalter, magnetoelastische Sensoren, pietzoelektronische Sensoren oder Temperatursensoren in Betracht. Vorteilhaft hierbei ist wiederum der Umstand, dass durch den Sensor die genaue Lage der Umleitung zu jedem Zeitpunkt der Arbeits- oder Ruhelage abgebildet werden kann. Dies gilt auch für den Zeitpunkt zwischen Arbeitslage und Ruhelage.

In einem bevorzugten Ausführungsbeispiel wird das Ventil und das Vakuumtransportband durch eine zentrale Rechnereinheit gesteuert und auf einander abgestimmt. Dies ermöglicht vorteilhafter Weise einen reibungslosen Ablauf des Gesamtprozesses.

Ein erfindungsgemässes Verfahren zur Aufnahme, Transport und Ablage eines flächigen Gegenstandes, weist als ersten Schritt das Zuführen eines flächigen Gegenstandes an den Rücklauf des Vakuumtransportbandes auf. Dieses Zuführung kann entweder automatisch durch eine entsprechende Zubringereinrichtung oder durch die besondere Ausformung von schräg angebrachten rutschenförmig gebildeten Zubringerflächen geschehen. Als Rücklauf des Vakuumtransportbandes ist hierbei die Unterseite des Vakuumtransportbandes gemeint, welches bei herkömmlichen Vakuumtransportbändern aus dem Stand der Technik nicht genutzt werden kann.

Anschliessend wird in die Innenkammer des Ventils Druckluft eingeblasen, so dass die Umleitung entsprechend der vorgegebenen Führungen bis zu dem Anschlag verschoben wird. Dadurch wird das Ventil von der Ruhelage in die Arbeitslage versetzt. Der Unterdruck, welcher im Zugang vorhanden war, wird nun durch die Umleitung in die Kammer des Vakuumtransportbandes ausgedehnt. Von der Kammer des Vakuumtransportbandes dehnt sich der Unterdruck weiter über die Zuführleitung des Halterelements in das Vakuumbecken aus. Dort entsteht aufgrund der Arbeitslage ein Unterdruck, welcher durch die Öffnungen des Vakuumtransportbandes bewirkt, dass ein flächiger Gegenstand aufgenommen wird. Vorteilhaft hierbei ist der Umstand, dass der gesamte Ablauf energieeffizient, schnell und reibungslos vonstatten gehen kann. In einem bevorzugten Verfahren wird der Gegenstand durch den auf dem Rücklauf erzeugten Unterdruck auf die Seite des Rücklaufs des Vakuumtransportbandes herangezogen und gehalten. Anschliessend wird das Vakuumtransportband durch den Umlaufantrieb bewegt, was wiederum dazu führt, dass der flächige Gegenstand ebenfalls auf der Kopf-Über befindlichen Seite, zu der Rücklaufseite des Vakuumtransportbandes bewegt wird. Dies hat den Vorteil, dass die bisher umständlich gestalteten Aufbauten, welche durch die bisher einzige Möglichkeit der Benutzung eines Vakuumtransportbandes durch Transport auf der Oberseite des Vakuumtransportbandes nun entfallen können.

Als Rücklauf wird die Unterseite des U-Profils bezeichnet. Die Transportseite ist die Oberseite des U-Profils. Unterseite bedeutet wiederum in diesem Zusammenhang die Seite, welche zum Boden einer Produktionsstätte zeigt.

Der Umlaufantrieb bewirkt im Zusammenspiel mit dem Vakuumtransportband nun den Abtransport des flächigen Gegenstandes aus dem Bereich der Aufnahme hin zu dem Bereich des Ablegens. Wenn das Ventil wieder aus der Arbeitslage in die Ruhelage versetzt werden soll, wird auf der anderen Stirnseite des Gehäuses des Ventils wiederum Druckluft in die Innenkammer des Ventils eingeblasen, so dass die Umleitung hin zum anderen Anschlag verschoben wird. Dadurch wird der Zugang wieder verschlossen und die Verbindung zwischen Zugang und Ausgang unterbrochen. Dadurch wird wiederum das Vakuumtransportband nicht weiter mit Unterdruck versorgt, was dazu führt, dass der flächige Gegenstand vom Vakuumtransportband aufgrund seiner Schwerkraft nach unten eine vorgegebene Stelle fällt. Vorteilhaft hierbei wiederum ist der Umstand, dass genau bestimmt werden kann, an welchem Zeitpunkt oder Ort der flächige Gegenstand vom Vakuumtransportband abfallen soll.

In einem bevorzugten Ausführungsbeispiel eines erfindungsgemässen Verfahrens kann der Ort des Einsatzes der Ruhelage des erfindungsgemässen Vakuumtransportbands auch in der Weise gestaltet sein, dass ein anderes Vakuumtransportband mit dem Transportlauf, also der Oberseite in der Weise angestellt ist, dass der flächige Gegenstand von der Rücklaufseite des einen Vakuumtransportbandes auf die Transportlaufseite des weiteren Vakuumtransportbandes gezogen, genommen oder gelassen werden kann. Vorteilhaft hierbei ist der Umstand, dass eine schonende Übergabe des flächigen Gegenstandes von dem Vakuumtransportband an das weitere Vakuumtransportband vollzogen werden kann, ohne dass hierbei Beschädigungen an dem flächigen Gegenstand auftreten können. Vorteilhaft ist ausserdem eine schnelle und reibungslose Übergabe des flächigen Gegenstandes zwischen den beiden Vakuumtransportbändern.

In einem bevorzugten Ausführungsbeispiel kann der flächige Gegenstand nun auf dem Transportlauf des weiteren Transportbandes durch Einsatz eines weiteren Umlaufantriebs abtransportiert werden. Vorteilhaft ist hierbei ist wiederum der Umstand, dass diese Übergang und der Abtransport modular aufgebaut werden kann und daher eine Anpassung an die Wünsche und Bedürfnisse jedes flächigen Gegenstandes oder Kunden oder Nutzers vorgesehen werden können.

Ein anderes bevorzugtes Ausführungsbeispiel eines erfindungsgemässen Verfahrens ist in der Weise gestaltet, dass mehr als zwei erfindungsgemässe Ventile mit zumindest einem Vakuumtransportband zusammengeschaltet werden können. Dies hat wiederum den Vorteil, dass eine höhere Effizienzsteigerung erreicht werden kann, da mehrere flächige Gegenstände auf einmal mit ein und demselben Vakuumtransportband aufgenommen, abtransportiert und abgelegt werden können.

### Kurze Beschreibung der Zeichnung

Weitere Vorteile und Merkmale bevorzugter Ausführungsformen der Erfindung werden nachfolgend anhand der beiliegenden Zeichnungen erläutert, wobei die Figuren zeigen:
Figur 1 zeigt eine teilweise geschnittene Seitenansicht einer erfindungsgemässen Ausführungsform des Vakuumtransportbandes;
Figur 2 eine vergrösserte Ansicht eines Teils nach Figur 1;
Figur 3 eine schematische Ansicht auf einen Teil eines erfindungsgemässen Vakuumtransportbands von schräg unten;
Figur 4 eine schematische Ansicht von schräg unten auf ein Ausführungsbeispiel eines erfindungsgemässen Ventils;
Figur 5 eine Seitenansicht des Ventils nach Figur 4;
Figur 6 eine geschnittene Ansicht von unten an der Schnittlinie A-A nach Figur 5;
Figur 7 eine geschnittene Seitenansicht von Figur 5 an der Schnittlinie B-B;

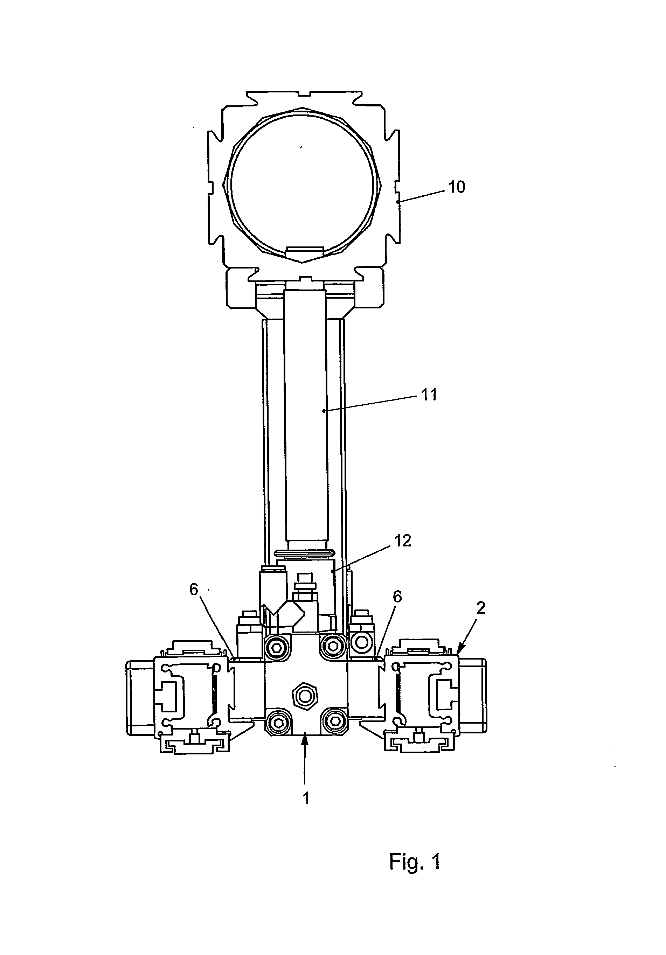

In Figur 1 ist zunächst eine Vakuumquelle 10 gezeigt. Von der dieser Vakuumquelle 10 verläuft ein Rohr 11 in einen Zugang 12, welcher wiederum die Verbindung mit einem Ventil 1 herstellt. Von diesem Ventil 1 wiederum verläuft ein Ausgang 6, welches wiederum die Verbindung zwischen dem Ventil 1 und dem Vakuumtransportband 2 herstellt.

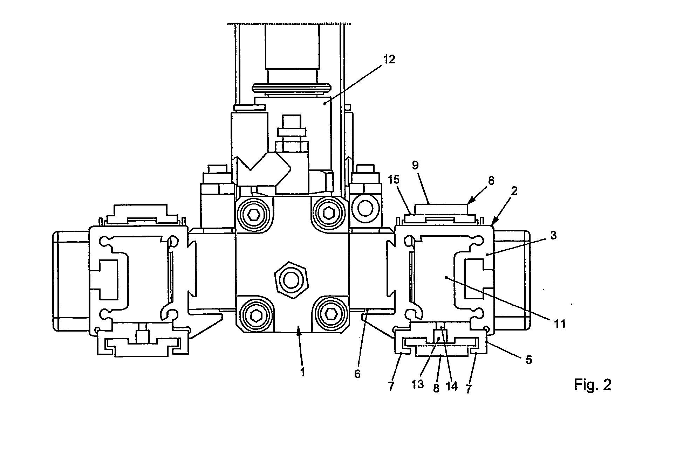

In Figur 2 ist der Bereich des Vakuumtransportbands 2 und das Ventil 1 des Ventils 1 näher gezeigt. Das Vakuumtransportband 2 weist wiederum ein U-Profil 3 auf. Ausserdem ist auf der Unterseite des U-Profils 3 ein Halterelement 5 gezeigt. Dieses Halterelement 5 wiederum weist zwei Halteflügel 7 auf, welche verhindern sollen, dass das umlaufende Transportband 8 durch die Schwerkraft nach unten gezogen wird. Nach unten bedeutet in diesem Zusammenhang auf die dem Zugang 12 abgewandte Seite. Das Transportband 8 besteht aus einer Oberseite 9 und einer Unterseite 15, wobei die Unterseite 15 als Zahnriemenausgeformt ist. Die Unterseite 15 wird in der Figur 2 von der Oberseite 9 durch eine gestrichelte Linie getrennt. Ausserdem weist die Vorrichtung 2 eine Kammer 11 auf. Diese Kammer 11 kann durch den Ausgang 6 in Unterdruck versetzt werden. Ausserdem ist zu erkennen, wie in das Halterelement 5 ein Vakuumbecken 13 und eine Zuführleitung 14 eingeformt ist.

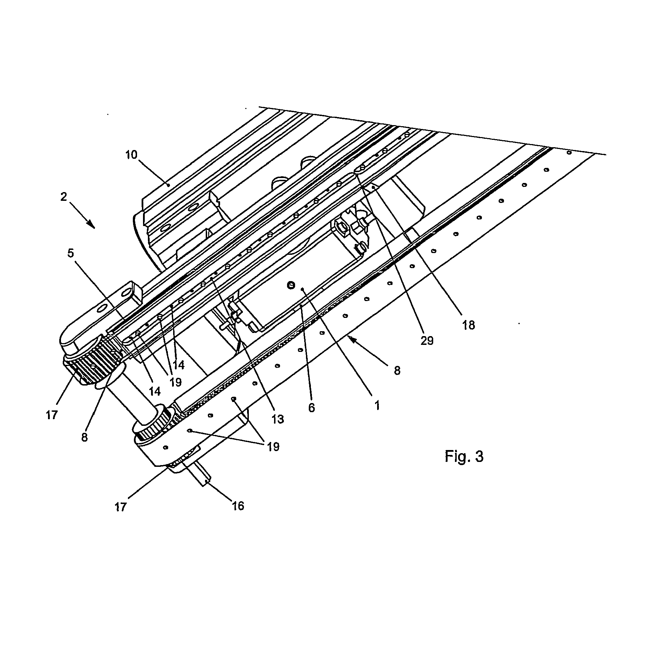

In Figur 3 wiederum ist eine Ansicht von schräg unten gezeigt. In der geschnitten dargestellten Ansicht des einen Vakuumtransportbandes ist gut zu erkennen, wie in das Transportband 8 Öffnungen 19 eingeformt sind. Ausserdem ist ein Umlaufantrieb 16 gezeigt, welcher über zumindest ein Zahnriemenrad 17 das Transportband 8 umlaufend bewegt. Daneben ist in der geschnitten dargestellten Ansicht eines Transportbandes 8 gut zu erkennen, wie mehrere Zuführleitungen in das Vakuumbecken 13 münden. Auch ist zu erkennen, wie die Gesamtlänge des Vakuumbeckens in etwa einem Abschnitt des U-Profils angepasst sind. Anfang und Ende des Abschnitts ist durch eine Markierung 18 aufgezeigt. Anfang und Ende des Abschnitts des Vakuumbeckens ist durch eine Brücke 29 gezeigt.

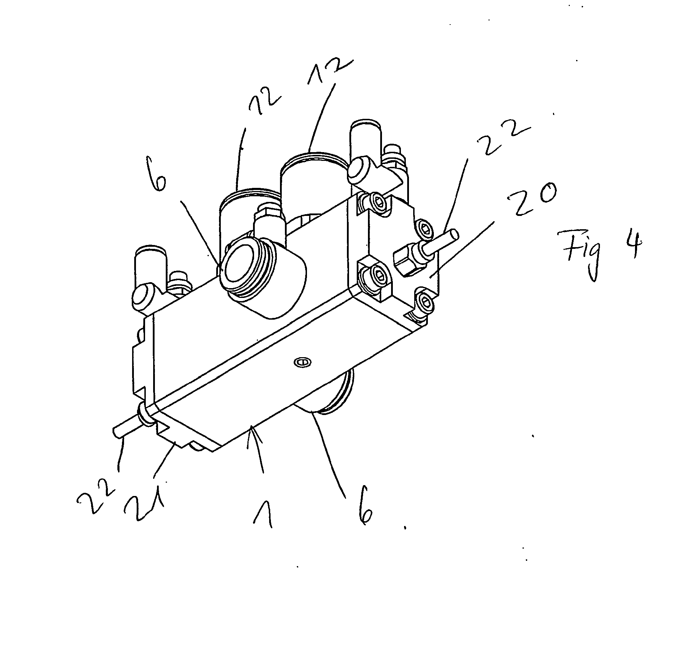

In Figur 4 wiederum ist das Ventil 1 nochmals gesondert gezeigt. Dort ist gut zu erkennen, wie an den Stirnseiten 20 und 21 jeweils ein Sensor 22 eingelassen ist. Ausserdem sind die Ausgänge mit der Bezugsziffer 6 und die Zugänge 12 gut zu erkennen.

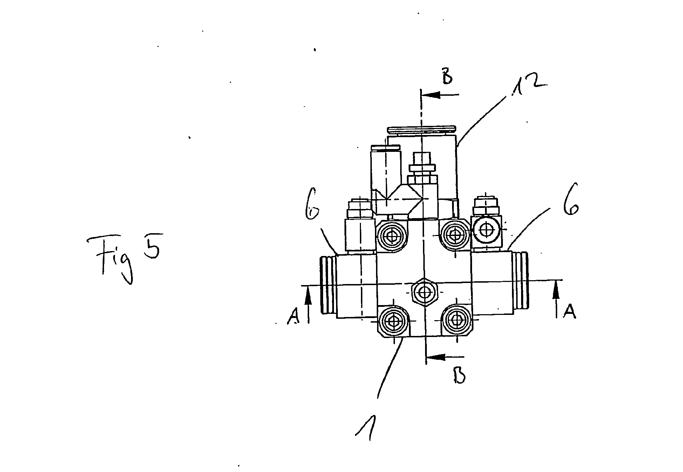

In Figur 5 ist eine Seitenansicht der Figur 4 gezeigt, wobei zwei Schnittlinie A-A und B-B aufgezeigt sind.

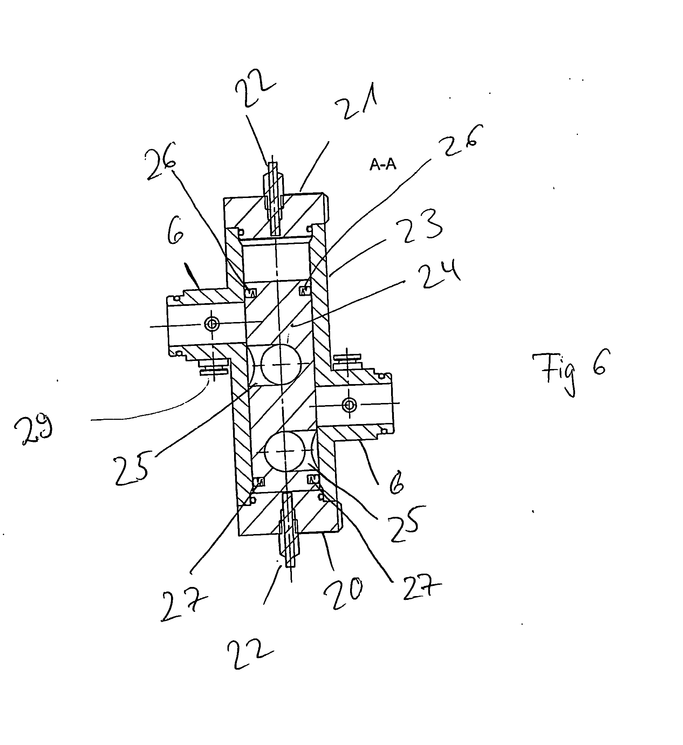

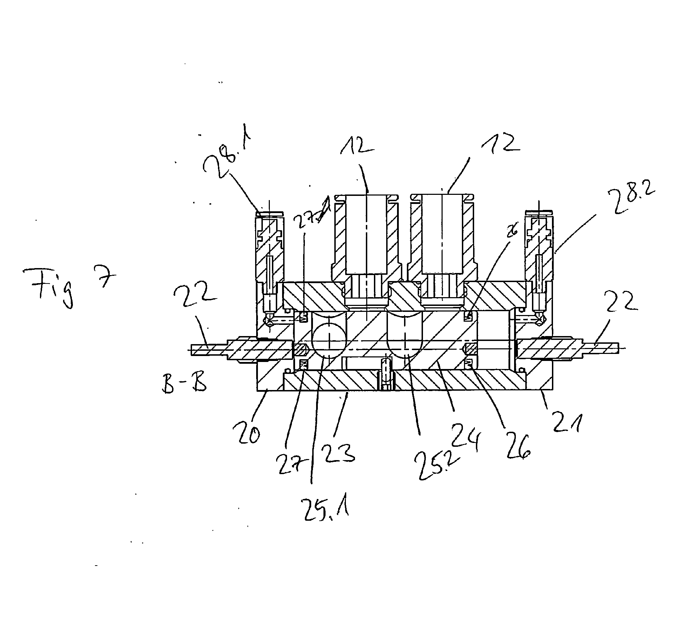

In Figur 6 wiederum ist nun die geschnittene Ansicht an der Schnittlinie A-A gezeigt. Dort ist zu erkennen, wie in einem Gehäuse 23 einen Kolben 24 vorhanden ist. In dem Kolben 24 wiederum sind zwei Umleitungen 25 und jeweils zwei Anschläge 26 und 27 angeordnet. Bei den Anschlägen 26, 27 handelt es sich bevorzugt um Dichtungen, welche verhindern, dass Druckluft entweichen kann. In der in Figur 6 gezeigten Position der Umleitungen 25 ist der Ausgang 6 gesperrt. Wie sich aus der Zusammenschau der Figuren 6 und 7 ergibt, liegen die Sensoren zwar in der gleichen Flächenebene aber versetzt zueinander. Jeweils ein Sensor 22 ist für die Ladedetektion einer Umleitung 25 vorgesehen. Die in Figur 7 gezeigten einzelnen Merkmale und Teile entsprechend denen in Figur 6. Auf Doppeinennungen der einzelnen Bezugsziffern wird daher verzichtet, ausser sie bedürfen einer gesonderten Benennung. In Figur 7 ist ausserdem ein Druckluftzulauf 28 gezeigt. Dieser Druckluftzulauf ist oberhalb der Sensoren angebracht. In der in Figur 7 gezeigten Position hat die Druckluftzufuhr 28.2 durch Einschuss von Druckluft dazu geführt, dass die Umleitung 25.1 an den Anschlag 27 angestossen ist und die Verbindung zwischen dem Zugang 12 und dem in Figur 7 nicht gezeigten Ausgang 6 damit unterbrochen ist. Würde nun die Druckluftzufuhr 28.1 Druckluft in die Innenkammer 24 schiessen, würde dies dazu führen, dass die Umleitung 25.1 hin zum Anschlag 26 bewegt werden würde, bis die Umleitung 25.2 an dem Anschlag 26 anschlägt. In dieser Position würde dann die Verbindung zwischen dem Zugang 12 und dem Ausgang 6 hergestellt werden, was wiederum die Folge hätte, dass in der Innenkammer 11 des Vakuumtransportbands 2 ein Unterdruck entstehen würde, welcher sich auch über die Zuführleitung 14 in das Vakuumbecken 13 fortsetzen würde.

Daneben ist in Figur 6 gezeigt, wie einen Abwurfimpulszugang 29 vorhanden ist. Durch den Abwurfimpulszugang 29 wird in das Innere des Gehäuses 23 Druckluft geblasen, was den Abwurf des zu transportierenden flächigen Gegenstands bewirkt. Hierzu wird bevorzugt einen kurzer Druckluftimpuls über einen nicht näher gezeigten Druckluftschlauch über den Abwurfimpulszugang 29 aufgebracht. Dies kann beispielsweise dadurch geschehen, dass durch die eingebrachte Druckluft die Umleitung 25 derart verschoben wird, dass der zu transportierende flächige Gegenstand von der Unterdruckquelle abgeschnitten wird oder die Umleitung 25 derart genutzt wird, dass anstatt eines Unterdrucks ein Druckluftimpuls an den zu transportierenden flächigen Gegenstand geleitet wird. Die erste Variante weist den Vorteil auf, dass der zu transportierende flächige Gegenstand nicht direkt mit Druckluft beaufschlagt wird und somit schonenden behandelt wird. Andererseits weist die zweite Variante den Vorteil auf, dass der zu transportierende flächige Gegenstand zügig von der Vorrichtung getrennt werden kann.

### Bezugszeichenliste

| | | | | | |
|---|---|---|---|---|---|
| 1 | Ventil | 34 | | 67 | |
| 2 | Vakuumtransportband | 35 | | 68 | |
| 3 | U-Profil | 36 | | 69 | |
| 4 | | 37 | | 70 | |
| 5 | Halterelement | 38 | | 71 | |
| 6 | Ausgang | 39 | | 72 | |
| 7 | Halteflügel | 40 | | 73 | |
| 8 | Transportband | 41 | | 74 | |
| 9 | Oberseite | 42 | | 75 | |
| 10 | Vakuumquelle | 43 | | 76 | |
| 11 | Kammer | 44 | | 77 | |
| 12 | Zugang | 45 | | 78 | |
| 13 | Vakuumbecken | 46 | | 79 | |
| 14 | Zuführleitung | 47 | | | |
| 15 | Unterseite | 48 | | | |
| 16 | Umlaufantrieb | 49 | | | |
| 17 | Zahnriemenrad | 50 | | | |
| 18 | Markierung | 51 | | | |
| 19 | Brücke | 52 | | | |
| 20 | Stirnseite | 53 | | | |
| 21 | Stirnseite | 54 | | | |
| 22 | Sensor | 55 | | | |
| 23 | Gehäuse | 56 | | | |
| 24 | Innenkammer | 57 | | | |
| 25 | Umleitung | 58 | | | |
| 26 | Anschlag | 59 | | | |
| 27 | Anschlag | 60 | | | |
| 28 | Druckluftzulauf | 61 | | | |
| 29 | Abwurfimpulszugang | 62 | | | |
| 30 | | 63 | | | |
| 31 | | 64 | | | |
| 32 | | 65 | | | |
| 33 | | 66 | | | |

## Patentansprüche

1. Vakuumtransportband zum Aufnehmen, Transportieren und Ablegen von flächigen Gegenständen,
- mit einem Umlaufantrieb (16),
- mit einem U-Profil (3), wobei das U-Profil (3) einen Transportlauf und einen Rücklauf umfasst,
- mit einem Transportband (8)
**gekennzeichnet dadurch,**
**dass** das U-Profil (3) auf der Rücklaufseite ein Halterelement (5) und zumindest einen Halteflügel (7)umfasst.

2. Vakuumtransportband nach Anspruch 1, **dadurch gekennzeichnet, dass** das Transportband (8) ein Zahnriemenprofil aufweist, wobei das Zahnriemenprofil mit dem Umlaufantrieb (16) zusammenwirkt.

3. Vakuumtransportband nach einem der Ansprüche 1 oder 2, **dadurch gekennzeichnet, dass** eine Kammer (11) im U-Profil (3) vorhanden ist, welche geeignet ist, das Transportband (8) mit Unterdruck zu versorgen.

4. Vakuumtransportband nach einem der Ansprüche 1 bis 3, **dadurch gekennzeichnet, dass** das Halterelement (5) zumindest eine Zuführleitung (14) und ein Vakuumbecken (13) umfasst.

5. Vakuumtransportband nach Anspruch 4, **dadurch gekennzeichnet, dass** die Zuführleitung (14) mit der Kammer (11) verbunden ist.

6. Vakuumtransportband nach einem der vorigen Ansprüche, **dadurch gekennzeichnet, dass** an dem Gehäuse (23) ein Abwurfimpulszugang (29) angeformt ist.

7. Vakuumtransportband nach einem der vorigen Ansprüche, **dadurch gekennzeichnet, dass** das U-Profil (3) in Abschnitte gegliedert ist.

8. Vakuumtransportband nach einem der Ansprüche 4 bis 7, **dadurch gekennzeichnet, dass** das in dem Halterelement (5) eingeformte Vakuumbecken (13) in voneinander getrennte Abschnitte gegliedert sind.

9. Verwendung einem Vakuumtransportband nach den Ansprüchen 1 bis 8, **gekennzeichnet dadurch, dass** ein Befördern von flächigen Gegenständen auf der Transportlaufseite und/oder auf der Rücklaufseite erfolgen kann.

10. Verwendung nach Anspruch 9, dass ein Befördern von flächigen Gegenständen abwechselnd zunächst auf der Rücklaufseite eines Vakuumtransportband erfolgt und anschliessend eine Weiterbeförderung auf der Transportseite eines weiteren Vakuumtransportbandes erfolgt.

11. Ventil für die Vakuumregelung des Vakuumtransportbands nach den Ansprüchen 1 bis 8,
- mit einem Zugang (12)
- mit einem Gehäuse (23) und einer Innenkammer (24)
- mit einem Ausgang (6)
**gekennzeichnet durch**,
einen Druckluftzulauf (28).

12. Ventil nach Anspruch 11, **dadurch gekennzeichnet, dass** in der Innenkammer (24) zumindest eine Umleitung (25) angeordnet ist, wobei die Umleitung (25) durch Druckluft in der Innenkammer (24) verschiebbar geführt ist, wobei das Gehäuse (23) einen Sensor (22) umfasst, geeignet zur Lagedetektion der Umleitung (25).

13. Ventil nach einem der Ansprüche 11 oder 12, **dadurch gekennzeichnet, dass** der Ausgang (6) mit der Kammer (11) verbunden ist, wobei die Umleitung (25) in Arbeitslage eine Verbindung zwischen dem Zugang und dem Ausgang herstellt, wobei in der Innenkammer (24) zumindest zwei Anschläge (26, 27) vorhanden sind..

14. Verfahren zur Aufnahme, Transport und Ablage eines flächigen Gegenstandes unter Verwendung des Vakuumtransportbandes nach den Ansprüchen 1 bis 8 und dem Ventil nach den Ansprüchen 11 bis 17, **gekennzeichnet durch** folgende Schritte:
- Zuführen eines flächigen Gegenstandes an den Rücklauf des Vakuumtransportbands (2),
- Druckluft wird in die Innenkammer (24) des Ventils (1) eingeblasen, geeignet zum Verschieben der Umleitung (25),
- es wird eine Verbindung zwischen dem Zugang (12) und dem Ausgang (6) des Ventils (1) hergestellt, wobei hierdurch Vakuum in der Kammer (11) und damit auch im Vakuumbecken (13) und der Zuführleitung (14) erzeugt wird,
- der flächige Gegenstand wird auf die Seite des Rücklaufs gezogen und gehalten,
- das Transportband (8) wird **durch** den Umlaufantrieb (16) bewegt bis eine Zwischenzielstation erreicht wird,
- Druckluft wird in die Innenkammer (24) des Ventils (1) eingeblasen, so dass die Umleitung (25) verschoben wird und den Zugang (12) verschliesst und die Verbindung zwischen Zugang (12) und Ausgang (6) unterbrochen wird,
- ein Abwurfimpuls wird **durch** Einleiten von Druckluft über den Abwurfimpulszugang (29) in das Innere des Gehäuses (23) eingeleitet, geeignet zur Trennung des flächigen Gegenstands von dem Transportband (8),
- der flächige Gegenstand wird an der Zwischenzielstation übergeben
- der flächige Gegenstand wird von der Zwischenzielstation abtransportiert.

15. Verfahren nach Anspruch 14, **gekennzeichnet dadurch, dass** mehr als zwei Ventile (1) nach den Ansprüchen 11 bis 13 mit zumindest eines Vakuumtransportband (2) nach den Ansprüchen 1 bis 8 zusammengeschaltet werden, wobei während des Transport des flächigen Gegenstands, dieser an das weitere Vakuumbecken (13) des Halterelements (5) weitergereicht wird, geeignet um ein Abgleiten des flächigen Gegenstandes zu verhindern.
